# FASCICULE DE BREVET EUROPEEN

(11) **EP 2 458 364 B1**
(45) Date de publication et mention de la délivrance du brevet: **08.04.2015**
(21) Numéro de dépôt: 11007927.4
(22) Date de dépôt: 29.09.2011
(51) Int. Cl.: G01M 13/02

(54) **Banc d'essais de cannelures, et procédé d'essais**
Rillentestbank und Testverfahren
Corrugation test bench and test method

(30) Priorité: 30.11.2010 FR 1004658
(43) Date de publication de la demande: 30.05.2012
(73) Titulaire: Airbus Helicopters, 13725 Marignane Cedex (FR)
(72) Inventeur: Jauffret, Laurent, 13580 La Fare des Oliviers (FR); Leitzelman, Jean-Loup, 13700 Marignane (FR)
(74) Mandataire: GPI & Associés

(56) Documents cités:
- EP-A2- 0 239 264
- US-A- 3 796 092
- US-A- 4 294 112

## Description

La présente invention concerne un banc d'essais et un procédé, et plus particulièrement un banc d'essais permettant de tester des cannelures telles que des cannelures d'une boîte de transmission de puissance d'un hélicoptère par exemple.

Un engrenage à cannelures comporte un premier ensemble de premières cannelures qui coopère avec un deuxième ensemble de deuxièmes cannelures, ces cannelures étant parfois dénommées « cannelures mâles » et «cannelures femelles ». Un tel agencement de cannelures est appelé par commodité « paire de cannelures ».

Lors de la mise en rotation d'une paire de cannelures, les premières et deuxièmes cannelures sont soumises à un couple de torsion dit plus simplement « couple » par la suite par commodité mais peuvent aussi être exposées à des moments de flexion dit plus simplement « moment » par la suite par commodité. Par exemple, un organe mécanique peut comprendre un carter dans lequel sont logés des arbres engrenés entre eux par des cannelures. La déformation du carter peut alors engendrer la création de moments de flexion exercés sur les cannelures.

Lors du développement d'un organe mécanique muni d'une paire de cannelures, il est utile de réaliser des essais pour vérifier le dimensionnement des cannelures et pour démontrer que l'organe mécanique répond aux spécifications requises. Ainsi, on réalise des essais d'endurance par exemple.

Par suite, on utilise des bancs d'essais pour tester les organes mécaniques, à savoir des bancs d'essais mécaniques ou hydrauliques à chaîne fermée.

Classiquement, un banc d'essais de type mécanique comporte par exemple un arbre amont relié à une première extrémité de l'ensemble tournant et un arbre aval relié à une deuxième extrémité de cet ensemble tournant, par des brides par exemple. L'arbre amont est alors relié d'une part à un moteur d'entraînement et d'autre part à l'arbre aval par une série d'arbres intermédiaires et de renvois.

Afin d'introduire un couple, on dispose un moyen de mise en couple entre l'arbre amont et l'arbre aval. Par exemple, on dispose un embrayage pour désolidariser temporairement l'arbre amont de l'arbre aval et on exerce un effort de torsion sur l'arbre aval après une solidarisation de l'embrayage.

L'état de la technique inclut notamment les documents US 4 294 112 et EP 0 239 264.

Le document US 4 294 112 présente un banc d'essais d'une paire de cannelures permettant d'introduire un couple sur les premières cannelures et les deuxièmes cannelures. De plus, les premières cannelures étant réparties angulairement autour d'un premier axe, les deuxièmes cannelures étant réparties angulairement autour d'un deuxième axe, le premier axe et le deuxième axe sont décalés l'un par rapport à l'autre d'une valeur fixe pour imposer un déplacement.

Ainsi, ce banc d'essais ne parait pas apte à faire varier aisément le moment de flexion exercé sur une paire de cannelures, durant un essai par exemple.

Le document EP 0 239 264 présente un banc d'essais pour appliquer un couple sur un organe mécanique tournant.

La présente invention a alors pour objet de proposer un banc d'essais de cannelures permettant de tester une paire de cannelures en soumettant lesdites cannelures à un couple de torsion et à un moment de flexion réglables sans modifier l'équipement en essais, et permettant éventuellement suivant la variante de comparer les résultats de l'essai avec une paire de cannelures témoin ou encore de tester une paire de cannelures en utilisant des moyens de lubrification.

Selon l'invention, un banc d'essais pour tester au moins une paire de cannelures pourvue de premières cannelures réparties sur un arbre principal s'étendant longitudinalement et de deuxièmes cannelures réparties sur un premier arbre secondaire s'étendant longitudinalement, l'arbre principal et le premier arbre secondaire étant agencés selon un même axe de rotation, comporte un moteur pour mettre en rotation chaque paire de cannelures.

De plus, ce banc d'essais est notamment remarquable en ce qu'il comporte :
- un arbre d'entraînement traversant l'arbre principal, l'arbre d'entraînement étant solidaire en rotation de chaque paire de cannelures, cet arbre d'entraînement étant mécaniquement relié au moteur ainsi qu'à l'arbre principal par une première chaîne cinématique et au premier arbre secondaire par une deuxième chaîne cinématique,
- un moyen de mise en couple de ladite paire de cannelures, ce moyen de mise en couple étant éventuellement amovible,
- un moyen de mise en moment muni d'un sous-ensemble de mise en moment par paire de cannelures pour soumettre ladite paire de cannelures à un moment de flexion, chaque sous-ensemble comprenant un moyen de pression coopérant avec une paire de cannelures et un moyen de déplacement, le moyen de déplacement mettant en rotation selon une direction transversale ledit moyen de pression.

Ainsi, les premières et deuxièmes cannelures et l'arbre d'entraînement présentent un même axe de rotation, chaque moyen de pression pouvant effectuer une rotation autour d'un axe de mise en moment sensiblement perpendiculaire audit axe de rotation.

Dès lors, le banc d'essais est un banc mécanique à chaîne fermée permettant de soumettre les cannelures à tester à un couple d'efforts et à un moment lors d'un entraînement en rotation à une vitesse donnée, l'essai étant ainsi représentatif des conditions rencontrées par les cannelures durant leur utilisation. La vitesse de rotation, le couple et le moment appliqués sur les cannelures sont aisément réglables sans modification structurelle du banc d'essais.

Le banc d'essais peut en outre posséder une ou plusieurs des caractéristiques suivantes.

Selon un aspect, le banc d'essais comporte un moyen de lubrification de la paire de cannelures. Les cannelures peuvent être testées à sec ou être lubrifiées, à l'aide d'un produit de type graisse ou huile par exemple.

Un tel moyen de lubrification peut comporter un tuyau d'acheminement divergeant inséré dans l'arbre d'entraînement, cet arbre d'entraînement comportant au moins un orifice radial pour alimenter en lubrifiant ladite paire de cannelures.

L'arbre d'entraînement est alors creux, une extrémité de cet arbre d'entraînement étant obturée par un tuyau d'acheminement divergeant. Le lubrifiant peut être injecté dans le tuyau d'acheminement divergeant par un gicleur, ce lubrifiant étant dirigé par le tuyau d'acheminement et ledit orifice radial vers les cannelures testées. On note que ce dispositif permet d'utiliser un gicleur installé sur un référentiel fixe pour alimenter en lubrifiant un organe tournant.

De plus, le banc d'essais peut comporter un couvercle pour collecter le lubrifiant suite à la lubrification de la paire de cannelures. Ce couvercle peut en outre être utilisé en tant que trappe de visite.

Par ailleurs, la première chaîne cinématique comportant au moins une première partie et une deuxième partie, la deuxième partie étant fixée à ladite première partie, la première partie étant fixée audit arbre d'entraînement et la deuxième partie étant reliée à l'arbre principal, le moyen de mise en couple est éventuellement muni d'un premier moyen de serrage coopérant avec la première partie et d'un deuxième moyen de serrage coopérant avec la deuxième partie, le moyen de mise en couple comprenant un moyen de réglage du couple apte à requérir un déplacement angulaire relatif entre la première partie et la deuxième partie.

Par exemple, le premier moyen de serrage et le deuxième moyen de serrage sont des ciseaux reliés l'un à l'autre par le moyen de réglage. En manoeuvrant le moyen de réglage lorsque le banc d'essais est à l'arrêt, un opérateur engendre une rotation contrarotative du premier moyen de serrage et du deuxième moyen de serrage autour de l'axe de rotation des cannelures à tester.

Avant de commencer l'essai, l'opérateur peut enlever le moyen de mise en couple.

On note que l'introduction du couple se fait par le biais d'un déplacement imposé, et à l'arrêt. La valeur du couple introduit est mesurée par exemple à l'aide des jauges de déformation collées à demeure sur l'une des pièces en essai, sur l'arbre principal par exemple. On obtient alors un moyen de mise en couple simple et peu onéreux.

Ces jauges de déformation sont par exemple visibles en ôtant un couvercle de protection, le cas échéant.

Selon un autre aspect, chaque chaîne cinématique peut comporter un moyen de désalignement axial et radial. En effet, le moyen de pression de chaque sous-ensemble du moyen de mise en moment exerce un effort qui tend à déplacer légèrement l'arbre d'entraînement. Les moyens de désalignement compensent alors un tel déplacement.

Les moyens de désalignement sont d'un type usuel, tels que des moyens munis d'au moins un flasque pourvu d'une pluralité de branches.

De plus, le banc d'essais peut comporter deux roues phoniques agencées respectivement à une première extrémité et une deuxième extrémité de l'arbre d'entraînement.

En effet, durant le déroulement de l'essai, les cannelures s'usent. L'usure des premières et deuxièmes cannelures d'une paire de cannelures se traduit dans la cinématique du banc d'essais par un déplacement angulaire par rapport à l'axe de rotation. Par conséquent, le couple exercé sur les cannelures étant introduit par un déplacement angulaire, la valeur du couple introduit initialement à l'aide du moyen de mise en couple diminue durant l'essai proportionnellement à l'usure des cannelures.

On peut penser que cette usure compromet l'essai. Toutefois, à l'aide des roues phoniques, il est possible de mesurer le déphasage angulaire provoqué par ladite usure. A compter d'un déphasage prédéterminée, on interrompt l'essai pour régler le couple à tester à sa valeur initiale.

A titre d'exemple, un opérateur introduit un couple de 500N.m à l'arrêt à l'aide du moyen de mise en couple. Un tel couple correspond à un déphasage angulaire donné entre les deux roues phoniques. L'usure des cannelures engendre un angle de déplacement relatif entre les roues phoniques. Lorsque le déphasage angulaire des roues phoniques atteint un seuil prédéterminé correspondant à un couple de l'ordre de 95% du couple initial, on interrompt l'essai et on rétablit ledit couple initial.

De plus, pour limiter l'effet de l'usure de chaque paire de cannelures, au moins une chaîne cinématique comporte un moyen muni d'une raideur en torsion minimisée, la première partie de la première chaîne cinématique précitée par exemple.

En outre, le moyen de pression peut comprendre un boîtier mobile et un fourreau amovible, le fourreau amovible étant en contact avec l'arbre secondaire de la paire de cannelures associée.

Ainsi, on peut adapter le banc d'essais à de multiples cannelures par le biais d'une opération simple, à savoir le remplacement d'un fourreau adapté à une paire de cannelures par un fourreau adapté à une autre paire de cannelures.

Par ailleurs, le banc d'essais comporte un moyen de blocage longitudinal de l'arbre principal pourvu d'au moins deux pions entre lesquels s'étend longitudinalement l'arbre principal.

Sous l'effet du couple et du moment appliqués sur la paire de cannelures testée, cette paire de cannelures risque de se déplacer longitudinalement selon l'effet du phénomène connu de précession.

Dès lors, le moyen de blocage limite un tel déplacement longitudinal.

En outre, le banc d'essais peut avantageusement tester deux paires de cannelures concomitamment, par exemple une paire de cannelures témoin et une paire de cannelures test ou encore une paire de cannelures lubrifiées avec un premier lubrifiant et une paire de cannelures lubrifiées avec un deuxième lubrifiant.

Les deux paires de cannelures peuvent alors être testées dans les mêmes conditions.

Ainsi, le banc testant deux paires de cannelures, une première paire étant pourvue de premières cannelures réparties sur une zone extrémale d'un arbre principal s'étendant longitudinalement et de deuxièmes cannelures réparties sur un premier arbre secondaire s'étendant longitudinalement, une deuxième paire étant pourvue de premières cannelures réparties sur une zone extrémale d'un arbre principal s'étendant longitudinalement et de deuxièmes cannelures réparties sur un deuxième arbre secondaire s'étendant longitudinalement, l'arbre d'entraînement étant solidaire en rotation de deux paires de cannelures, l'arbre d'entraînement est relié à l'arbre principal en étant mécaniquement relié au deuxième arbre secondaire par la première chaîne cinématique et au premier arbre secondaire par une deuxième chaîne cinématique.

De plus, le moyen de mise en moment peut comporter un moyen d'ajustement requérant un déplacement angulaire relatif entre un premier sous-ensemble du moyen de mise en couple coopérant avec la première paire de cannelures et un deuxième sous-ensemble du moyen de mise en couple coopérant avec la deuxième paire de cannelures.

Les deux paires de cannelures sont alors sollicitées par un moment de même amplitude mais de signes différents.

Selon un autre aspect, le moyen de mise en moment comporte un premier axe de liaison solidaire en rotation d'un premier moyen de pression du premier sous-ensemble et un deuxième axe de liaison solidaire en rotation d'un deuxième moyen de pression du deuxième sous-ensemble, le premier axe de liaison et le deuxième axe de liaison étant reliés à un même moyen de déplacement, le premier axe de liaison et le deuxième axe de liaison présentant des dimensions distinctes.

Par exemple, les axes de liaisons sont des cylindres de diamètres différents.

Par suite, le phénomène possible de couplage est limité voire supprimé. En effet avec des dimensions similaires, et suivant certaines sollicitations, on pourrait observer des oscillations autour d'une position moyenne de chacun des axes de liaison. La valeur du moment étant fonction des positions des organes concernés, il pourrait en résulter des variations de moment appliqué à chacune des cannelures en essais.

Par ailleurs, le moyen de déplacement peut comprendre un moyen d'ajustement comportant un organe à longueur variable disposé entre un organe élastique et un sous-ensemble, ledit organe élastique comportant par exemple un piston relié à un sous-ensemble et un carter lié à l'autre sous-ensemble, un moyen élastique étant disposé entre ledit piston et ledit carter.

L'organe élastique permet alors de maintenir l'application du moment en rattrapant le jeu présent entre les premières cannelures et les deuxièmes cannelures d'une paire de cannelures, ce jeu résultant de l'usure desdites cannelures au cours de l'essai.

Selon une variante préférée, un banc d'essais de deux paires de cannelures comporte :
- un arbre d'entraînement dont une première extrémité est attachée à un premier moyen de désalignement de la première chaîne cinématique, ce premier moyen de désalignement étant attaché à une première partie de la première chaîne cinématique ladite première partie étant fixée à une deuxième partie de la première chaîne cinématique, ladite deuxième partie étant solidaire du deuxième arbre secondaire,
- un moyen intermédiaire en prise sur une deuxième extrémité dudit arbre d'entraînement, ce moyen intermédiaire étant attaché à un deuxième moyen de désalignement de la deuxième chaîne cinématique qui est attaché au premier arbre secondaire,
- un moyen de mise en couple des deux paires de cannelures pour décaler angulairement ladite première partie par rapport à ladite deuxième partie,
- un moyen de mise en moment muni d'un premier sous-ensemble comprenant un premier moyen de pression coopérant avec un moyen de déplacement apte à mettre en rotation selon une direction transversale le premier moyen de pression, le premier moyen de pression exerçant une pression sur le premier arbre secondaire variable en fonction de sa position angulaire par rapport à la direction transversale,
- un deuxième sous-ensemble du moyen de mise en moment, ce deuxième sous-ensemble comprenant un deuxième moyen de pression coopérant avec le moyen de déplacement apte à mettre en rotation selon une direction transversale le deuxième moyen de pression, le deuxième moyen de pression exerçant une pression sur le deuxième arbre secondaire variable en fonction de sa position angulaire par rapport à ladite direction transversale,
- un moyen d'ajustement du moyen de déplacement pour requérir un déplacement angulaire relatif quantifiable entre le premier moyen de pression et le deuxième moyen de pression.

On note que les deux moyens de pression sont identiques et symétriques par rapport à un plan de symétrie transversal.

Outre, un banc d'essais, l'invention vise aussi un procédé de test d'au moins une paire de cannelures à l'aide d'un banc d'essais comprenant une ou plusieurs des caractéristiques énoncées précédemment.

Selon ce procédé :
- on règle le couple de l'essai en manoeuvrant un moyen de mise en couple, puis on désolidarise le moyen de mise en couple du banc d'essais,
- on règle le moment appliqué sur chaque paire de cannelures à l'aide d'un moyen de mise en moment, ledit moment étant modifiable au cours de l'essai,
- on mesure le déplacement relatif de deux organes tournants du banc d'essais, et on règle à nouveau ledit couple lorsque ledit déplacement relatif atteint un seuil prédéterminé.

De plus, le moyen de mise en moment comportant deux sous-ensembles coopérant chacun avec une paire de cannelures, chaque sous-ensemble étant muni d'un moyen de pression solidaire d'un axe de liaison de mise en moment mis en rotation par un moyen de déplacement, on peut disposer une jauge de contrainte sur chaque axe de liaison de mise en moment, et on arrête le moteur du banc lorsque lesdits jauges de contrainte transmettent des signaux différents.

L'invention et ses avantages apparaîtront avec plus de détails dans le cadre de la description qui suit avec des exemples de réalisation donnés à titre illustratif en référence aux figures annexées qui représentent :
- la figure 1, une vue en trois dimensions d'un banc d'essais selon l'invention,
- la figure 2, un schéma représentant une première variante dudit banc d'essais,
- la figure 3, une coupe longitudinale d'une deuxième variante dudit banc d'essais,
- la figure 4, une vue montrant le moyen de mise en couple selon l'invention,
- la figure 5, une vue montrant le moyen de mise en moment selon l'invention, et
- la figure 6 la première partie d'une première chaîne cinématique.

Les éléments présents dans plusieurs figures distinctes sont affectés d'une seule et même référence.

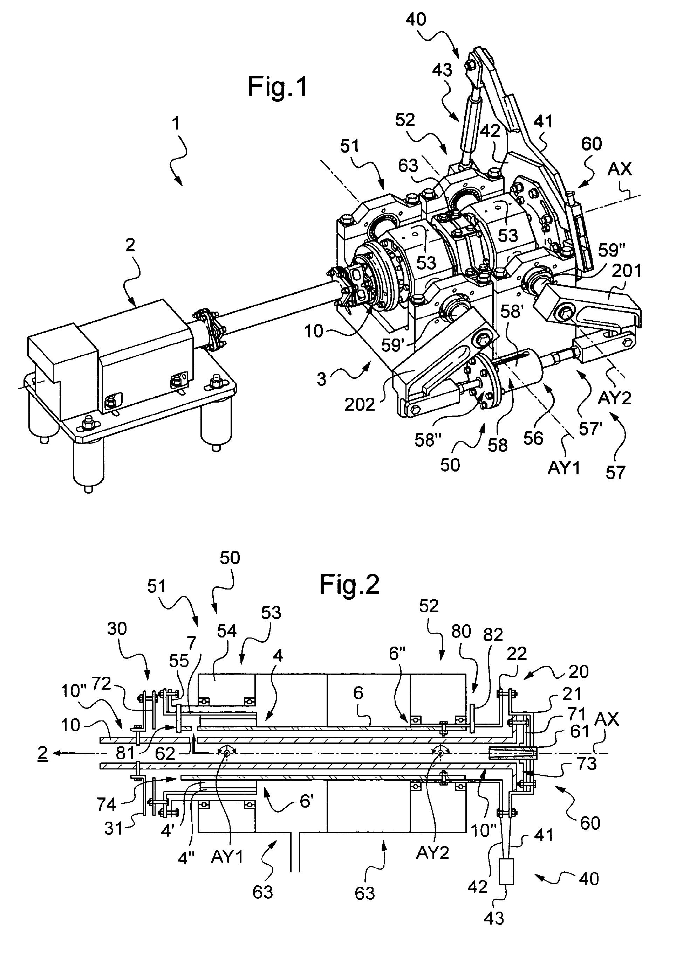

La figure 1 présente une vue en trois dimensions d'un banc d'essais 1.

Le banc d'essais 1 comporte un moteur 2 pour mettre en mouvement une chaîne mécanique fermée 3, cette chaîne mécanique incluant au moins une paire de cannelures à tester, et plus particulièrement deux paires de cannelures à tester.

Dès lors, le moteur 2 entraîne en rotation autour d'un axe de rotation AX un arbre d'entraînement 10 à une vitesse prédéterminée, cet arbre d'entraînement mettant en mouvement les cannelures à tester. Lorsque le banc d'essais est utilisé pour tester deux paires de cannelures, ces deux paires de cannelures sont mises en mouvement de manière synchrone.

Le banc d'essais permet de soumettre les paires de cannelures en essai à un couple de torsion prédéterminé, dénommé couple par commodité. Le couple est introduit par le banc d'essais indépendamment de la vitesse de rotation de rotation des cannelures en essais autour de l'axe de rotation AX.

Dès lors, le banc d'essais 1 comporte un moyen de mise en couple 40 des paires de cannelure en essais. Le moyen de mise en couple comprend un premier moyen de serrage 41 amovible pouvant être disposé sur un élément tournant du banc d'essais 1, et un deuxième moyen de serrage 42 amovible disposé sur un élément tournant du banc d'essais 1.

Le moyen de mise en couple 40 possède de plus un moyen de réglage 43 du couple, une bielle à longueur variable reliant le premier moyen de serrage 41 au deuxième moyen de serrage 42. En manoeuvrant le moyen de réglage 43 du couple, un opérateur requiert un déplacement angulaire autour de l'axe de rotation AX relatif du premier moyen de serrage 41 et du deuxième moyen de serrage 42, et de fait des éléments tournants associés.

Cette manoeuvre est réalisée par un opérateur à l'arrêt du moteur 2.

Pour limiter l'impact de l'usure des cannelures sur le couple appliqué à ces cannelures, il est concevable de minimiser la raideur d'un élément du banc d'essais, par exemple l'élément coopérant avec le premier moyen de serrage 41.

Par ailleurs le banc d'essais 1 comporte avantageusement un moyen de mise en moment 50 muni d'un sous-ensemble par paire de cannelures pouvant être testées, soit un premier sous-ensemble 51 et un deuxième sous-ensemble 52 sur l'exemple représenté. Chaque sous-ensemble 51, 52 exerce un moment sur les éléments en test.

Par suite, chaque sous-ensemble comprend un moyen de pression 53 libre d'effectuer une rotation selon une direction transversale AY1, AY2 sensiblement perpendiculaire à l'axe de rotation AX.

De plus, le moyen de mise en moment 50 inclut un moyen de déplacement 56 pour requérir une telle rotation des moyens de pression 53. Le moyen de déplacement 56 peut être un moyen de déplacement muni d'un moteur ou encore un système mécanique manoeuvrable manuellement.

Par exemple, le moyen de déplacement 56 comporte un moyen d'ajustement 57 pourvu d'un organe à longueur variable de type bielle réglable 57', et d'un organe élastique 58.

Chaque moyen de pression étant solidaire d'un axe de liaison 59', 59" de mise en rotation, tel qu'un premier axe de liaison 59' solidaire d'un premier moyen de pression et un deuxième axe de liaison 59" solidaire d'un deuxième moyen de pression, l'organe élastique 58 coopère avec lesdits axes de liaison 59', 59", l'organe à longueur variable 57' étant agencé entre ledit organe élastique 58 et un axe de liaison.

Cet organe élastique peut comprendre un corps 58' et un piston 58". Le corps 58' est par exemple fixé à l'organe à longueur variable 57', cet organe à longueur variable étant relié à un axe de liaison 59" par un levier 201. De même, le piston 58" est relié à un axe de liaison 59' par un levier 202. On verra par la suite qu'un moyen élastique est agencé entre le piston 58" et le corps 58'.

Un tel moyen de mise en moment vise notamment à appliquer le moment désiré sur les cannelures à tester, indépendamment de leur usure.

On note que le premier axe de liaison 59' et le deuxième axe de liaison 59" ont des dimensions distinctes pour au moins limiter les risques d'apparition du phénomène de couplage.

Selon une variante non représentée, le banc d'essais est prévu pour tester une unique paire de cannelures. Selon cette variante, l'organe élastique est relié à l'axe de liaison d'un unique moyen de pression et à un point fixe du banc.

Par ailleurs, il est possible d'agencer des couvercles 63 amovibles pour par exemple visualiser des moyens de mesure agencés sur l'arbre d'entraînement 10. Ces couvercles peuvent de plus faire partie d'un moyen de lubrification 60 des cannelures.

Conformément au procédé selon l'invention, un opérateur règle le couple de l'essai en manoeuvrant le moyen de mise en couple 40, puis désolidarise le moyen de mise en couple 40 du banc d'essais 1.

De plus, l'opérateur règle le moment appliqué sur chaque paire de cannelures 4, 5 à l'aide d'un moyen de mise en moment 50, ce moment étant modifiable au cours de l'essai.

En outre, on mesure le déplacement relatif de deux organes tournants dudit banc d'essais 1, à l'aide de roues phoniques reliées à un moyen de contrôle du banc d'essais 1 par exemple, puis on règle à nouveau le couple lorsque ledit déplacement relatif atteint un seuil prédéterminé. Les deux organes tournants peuvent être la première extrémité 10' et la deuxième extrémité 10" de l'arbre d'entraînement 10.

De même, le moyen de mise en moment 50 comportant deux sous-ensembles 51, 52 coopérant chacun avec une paire de cannelures 4, 5, chaque sous-ensemble 51, 52 étant muni d'un moyen de pression 53 solidaire d'un axe de liaison 59', 59" mis en rotation par un moyen de déplacement 56, on dispose une jauge de contrainte sur chaque axe de liaison 59', 59". Dès lors, on arrête le moteur du banc d'essais 1 lorsque les jauges de contrainte transmettent des signaux différents dans la mesure où des signaux différents seraient synonymes d'un blocage d'un banc d'essais.

La figure 2 présente un schéma représentant une première variante du banc d'essais 1 adaptée pour tester une unique paire de cannelures.

Indépendamment de la variante, le banc d'essais 1 permet de tester au moins un paire de cannelures pourvue de premières cannelures 4' réparties sur la circonférence extérieure d'une première zone extrémale 6' d'un arbre principal 6 par exemple, et de deuxièmes cannelures 4" réparties sur la circonférence intérieure d'un premier arbre secondaire 7.

Le banc d'essais 1 comprend alors un arbre d'entraînement 10 mis en mouvement par un moteur 2, cet arbre d'entraînement 10 traversant longitudinalement de part en part l'arbre principal 6.

Dès lors, l'arbre d'entraînement 10, l'arbre principal 6 et le premier arbre secondaire 7 s'étendent longitudinalement le long du même axe de rotation AX, de manière à effectuer une rotation autour dudit axe de rotation AX.

L'arbre d'entraînement 10 est de plus relié à l'arbre principal 6 par une première chaîne cinématique 20 et une deuxième chaîne cinématique 30.

La première chaîne cinématique 20 comprend successivement à partir de la première extrémité 10' de l'arbre d'entraînement un premier moyen de désalignement 71 fixé à une première partie 21, la première partie 21 étant fixée à une deuxième partie 22 solidarisée selon cette variante à la deuxième zone extrémale 6" de l'arbre principal. Des cannelures surdimensionnées par rapport aux cannelures en essais peuvent servir de moyen de liaison entre la deuxième partie 22 et l'arbre principal 6.

On note que l'on entend par « cannelures surdimensionnées » des cannelures considérées comme infiniment rigides répondant à des critères de dimensionnement beaucoup plus importants que les critères de dimensionnement des cannelures à tester, de l'ordre d'un facteur dix par exemple.

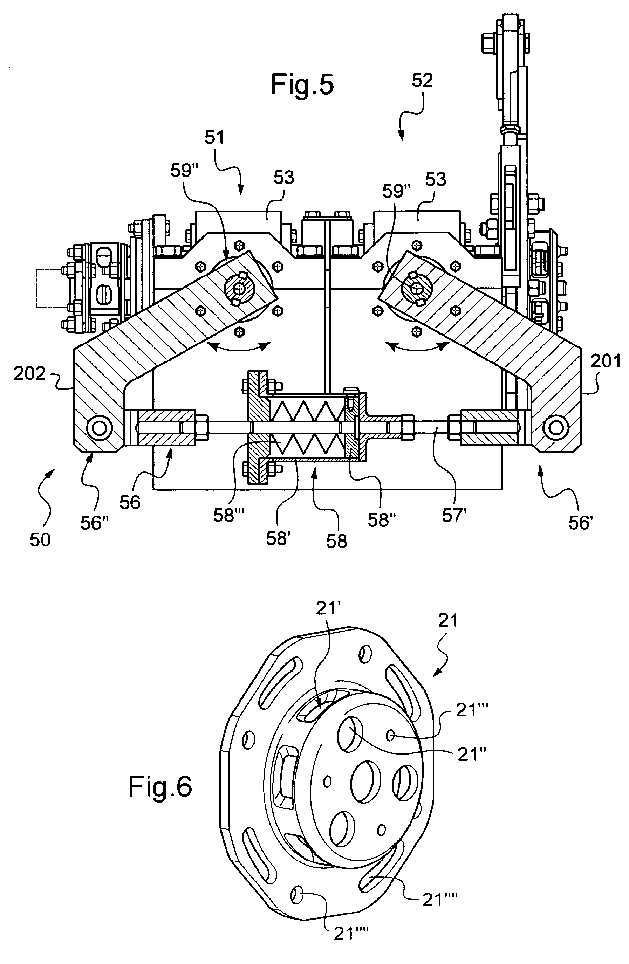

En référence à la figure 6, la première partie 21 peut comprendre des lumières 21' afin de minimiser sa raideur en torsion. La raideur en torsion minimisée de la première partie a pour fonction de minimiser l'impact de l'usure des cannelures en essai sur la valeur du couple appliqué à ces cannelures.

De plus, la première partie peut comprendre des orifices 21" pour donner un accès à des moyens de fixation du premier moyen de désalignement 71 à l'arbre d'entraînement, des orifices de fixation 21'" pour fixer cette première partie 21 au premier moyen de désalignement 71, et des orifices de fixation 21"" pour fixer cette première partie 21 à la deuxième partie 22.

En référence à la figure 2, le premier moyen de serrage 41 du moyen de mise en couple 40 coopère alors avec la première partie 21, alors que le deuxième moyen de serrage 42 du moyen de mise en couple 40 coopère avec la deuxième partie 22.

En outre, on note que le premier moyen de désalignement peut être proche d'une première roue phonique 73 agencée sur la première extrémité 10' de l'arbre d'entraînement, la première roue phonique étant reliée à un moyen de contrôle pour évaluer le couple appliqué sur les cannelures à tester.

La deuxième chaîne cinématique 30 comprend successivement un moyen intermédiaire 31 en prise sur la deuxième extrémité 10" dudit arbre d'entraînement 10 par exemple via des cannelures surdimensionnées par rapport aux cannelures en essais.

Le moyen intermédiaire 31 est alors fixé à un deuxième moyen de désalignement 72 fixé au premier arbre secondaire 7 portant des deuxièmes cannelures 4" engrenant des premières cannelures 4' disposées sur une première zone extrémale 6' de l'arbre principal.

En outre, on note que le deuxième moyen de désalignement 72 peut être proche d'une deuxième roue phonique 74 agencée sur la deuxième extrémité 10" de l'arbre d'entraînement 10, la deuxième roue phonique étant reliée au moyen de contrôle pour évaluer le couple appliqué sur les cannelures à tester.

Pour éviter un déplacement longitudinal de l'arbre principal 6 suite à un phénomène de précession, le banc d'essais 1 comporte un moyen de blocage 80 longitudinal, pourvu d'au moins deux pions 81, 82 entre lesquels s'étend ledit arbre principal 6. Ces pions sont situés au plus prêt de l'arbre principal 6, mais en présentant cependant un jeu longitudinal minimisé avec cet arbre principal 6.

De même, chaque pion présente un jeu radial avec l'arbre d'entraînement 10 pour ne pas entrer en contact avec ledit arbre principal 6.

En effet, le moyen de mise en moment 50 comporte au moins un moyen de pression 53 par paire de cannelures à tester.

Selon la première variante, il est possible de prévoir un moyen de pression coopérant avec la paire de cannelures à tester, et un moyen de pression coopérant avec la deuxième partie par exemple. Toutefois, on rappelle qu'il est concevable d'utiliser un unique moyen de pression pour tester une unique paire de cannelures.

Les moyens de pression 53 sont par exemple munis d'un boîtier 54 relié à un axe de liaison de mise en moment et d'un fourreau 55, le boîtier 54 étant muni de moyens de roulement pour ne pas entraver le mouvement rotatif des organes tournants avec lesquels il coopère.

Le fourreau n'est pas obligatoire. Toutefois, l'utilisation d'un fourreau permet d'utiliser un boîtier inamovible. En effet, on adapte le banc d'essais à divers types de cannelures en modifiant uniquement le fourreau si nécessaire.

Lorsque le boîtier d'un moyen de pression effectue une rotation autour d'un axe transversale AY1, AY2, ce moyen de pression exerce une pression sur l'organe tournant avec lequel il coopère, à savoir le premier arbre secondaire et la deuxième partie pour les moyens de pression de la figure 2.

Lors de l'application du moment sur les cannelures, l'arbre d'entraînement est alors susceptible de se déplacer. Dès lors, la présence d'un jeu radial permet d'éviter un contact entre les pions et l'arbre d'entraînement 10.

Selon un autre aspect, le banc d'essais comporte un moyen de lubrification 60 de la paire de cannelures 4, 5.

Le moyen de lubrification peut comprendre des joints permettant de circonscrire le produit lubrifiant dans le secteur des cannelures à tester, de tels joints pouvant coopérer avec des gorges internes de l'arbre secondaire portant les deuxièmes cannelures.

De plus, le moyen de lubrification 60 comporte un tuyau d'acheminement 61 divergeant inséré dans la première extrémité 10' de l'arbre d'entraînement 10, cet arbre d'entraînement 10 comportant au moins un orifice radial 62 pour alimenter en lubrifiant ladite paire de cannelures 4 à lubrifier.

Dans ces conditions, on peut diriger un lubrifiant de type huile dans le tuyau d'acheminement 61 à l'aide d'un gicleur, le lubrifiant s'échappant de l'espace interne de l'arbre d'entraînement 10 par les orifices radiaux pour rejoindre les cannelures à lubrifier.

Par conséquent, le banc d'essais peut comporter un couvercle 63 évacuant le lubrifiant suite à la lubrification de ladite paire de cannelures 4. Le couvercle peut aussi représenter une trappe de visite, permettant par exemple d'installer des jauges de contraintes sur l'arbre d'entraînement.

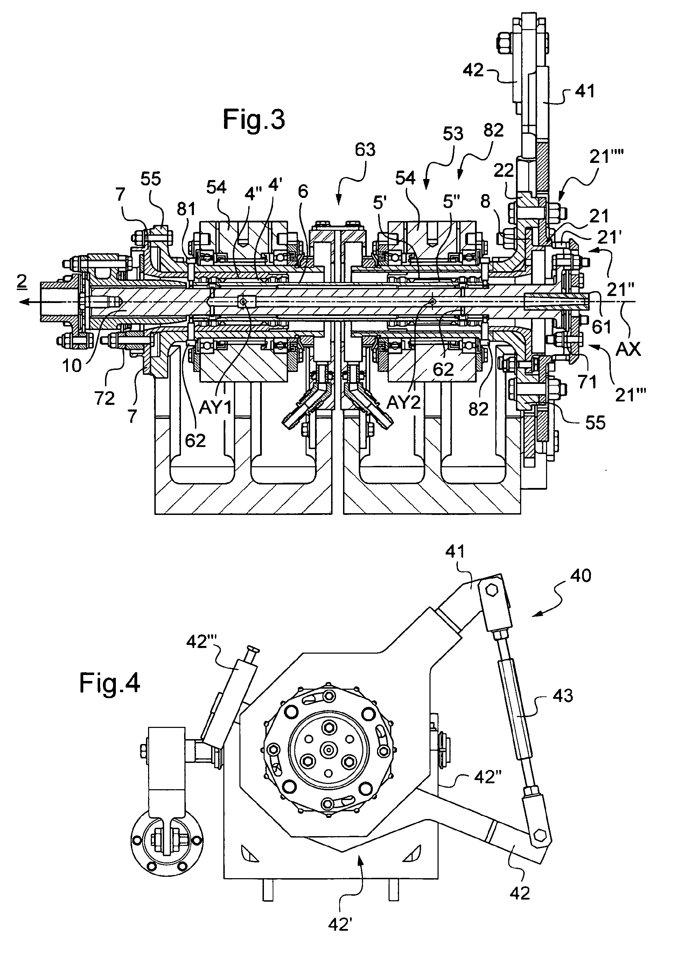

La figure 3 présente une coupe longitudinale d'une deuxième variante du banc d'essais 1 adaptée pour tester simultanément deux paires de cannelures, à savoir une première paire 4 pourvue de premières cannelures 4' réparties sur une première zone extrémale 6' de l'arbre principal 6 et de deuxièmes cannelures 4" réparties sur un premier arbre secondaire 7, et une deuxième paire 5 étant pourvue de premières cannelures 5' réparties sur une deuxième zone extrémale 6" de l'arbre principal 6 et de deuxièmes cannelures 5" réparties sur un deuxième arbre secondaire 8 s'étendant longitudinalement.

Désormais, la première chaîne cinématique inclut le deuxième arbre secondaire 8, la deuxième partie 22 étant reliée à l'arbre principal 6 via la deuxième paire de cannelures 5.

Par conséquent, le banc d'essais 1 comporte :
- un arbre d'entraînement 10, une première extrémité 10' de l'arbre d'entraînement 10 étant attachée à un premier moyen de désalignement 71 de la première chaîne cinématique 20, ce premier moyen de désalignement 71 étant fixé par des moyens de type boulons à une première partie 21 de la première chaîne cinématique 20, cette première partie 21 étant fixée à une deuxième partie 22 de cette première chaîne cinématique 20 solidaire du deuxième arbre secondaire 8,
- un moyen intermédiaire 31 en prise sur la deuxième extrémité 10" de l'arbre d'entraînement 10, ce moyen intermédiaire 31 étant relié à un deuxième moyen de désalignement 72 de la deuxième chaîne cinématique 30 qui est relié au premier arbre secondaire 7,
- un moyen de mise en couple 40 des paire de cannelures pour décaler angulairement la première partie 21 par rapport à la deuxième partie 22,
- un moyen de mise en moment 50 muni d'un premier sous-ensemble 51 et d'un deuxième sous-ensemble 52, le premier sous-ensemble 51 comprenant un premier moyen de pression 53 coopérant avec un moyen de déplacement 56 apte à mettre en rotation selon une première direction transversale AY1 ce premier moyen de pression 53, le deuxième sous-ensemble 52 comprenant un deuxième moyen de pression 53, le moyen de déplacement 56 étant apte à mettre en rotation le deuxième moyen de pression 53 selon une deuxième direction transversale AY2, le moyen de déplacement 56 comprenant un moyen d'ajustement 57 pour requérir un déplacement angulaire relatif quantifiable entre le premier moyen de pression et le deuxième moyen de pression.

De plus, un moyen de lubrification comporte des premier et deuxième orifices radiaux pour mettre en relation une cavité longitudinale de l'arbre d'entraînement alimenté en lubrifiant et les paires de cannelures à tester.

Les premiers orifices radiaux alimentés en premier lieu par le lubrifiant ont des dimensions inférieures aux deuxièmes orifices radiaux afin de garantir que le lubrifiant soit réparti entre ces premiers et deuxièmes orifices radiaux.

La figure 4 présente le moyen de mise en couple selon l'invention.

Dès lors, la figure 4 fait apparaître le premier moyen de serrage 41 et le deuxième moyen de serrage 42, ainsi que le moyen de réglage 43 reliant le premier moyen de serrage 41 et le deuxième moyen de serrage 42.

On note qu'au moins un moyen de serrage, en l'occurrence le deuxième moyen de serrage 42 sur l'exemple représenté, peut posséder deux mâchoires 42', 42" lié par un moyen de fixation 42"'.

Par ailleurs, la figure 5 présente le moyen de mise en moment selon l'invention.

Ce moyen de mise en moment peut comprendre un premier sous-ensemble 51 et un deuxième sous ensemble 52 coopérant avec un même moyen de déplacement 56.

Chaque sous-ensemble inclut alors un moyen de pression 53 rotatif solidaire d'un axe de liaison 59', 59" dont la position angulaire autour d'une direction transversale est commandée par le moyen de déplacement 56. On note que le déplacement d'un moyen de pression s'effectue selon un sens au contraire au déplacement de l'autre moyen de pression. Un moyen de pression se déplace selon un sens senestrorsum lorsque l'autre moyen de pression se déplace selon un sens dextrorsum.

Le moyen de déplacement 56 comprend une première liaison 56' et une deuxième liaison 56" pour relier un organe élastique 58 à chaque axe de liaison, un desdites liaisons comportant un moyen d'ajustement 57 à longueur variable.

L'organe élastique 58 possède alors un carter 58' solidaire d'une liaison, la première liaison 56' munie du moyen d'ajustement sur la variante représentée, et un piston 58" solidaire de l'autre liaison 56". Le piston 58" est alors monté coulissant à l'intérieur du corps 58', un moyen élastique 58"' étant disposé entre le piston 58" et le corps 58'.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que définie par les revendications.

## Revendications

1. Banc d'essais (1) pour tester au moins une paire de cannelures (4, 5) pourvue de premières cannelures (4', 5') réparties sur un arbre principal (6) s'étendant longitudinalement et de deuxièmes cannelures (4", 5") réparties sur un premier arbre secondaire (7) s'étendant longitudinalement, l'arbre principal (6) et le premier arbre secondaire (7) étant agencés selon un même axe de rotation (AX) ledit banc d'essais comportant un moteur (2) pour mettre en rotation chaque paire de cannelures (4, 5),
**caractérisé en ce qu'**il comporte :
- un arbre d'entraînement (10) traversant longitudinalement de part en part l'arbre principal (6), ledit arbre d'entraînement (10) étant solidaire en rotation de chaque paire de cannelures (4, 5), ledit arbre d'entraînement (10) étant mécaniquement relié au moteur (2) ainsi qu'à l'arbre principal (6) par une première chaîne cinématique (20) et au premier arbre secondaire (7) par une deuxième chaîne cinématique (30),
- un moyen de mise en couple (40) de ladite paire de cannelures (4, 5),
- un moyen de mise en moment (50) muni d'un sous-ensemble (51, 52) de mise en moment par paire de cannelures (4, 5) pour soumettre ladite paire de cannelures (4, 5) à un moment de flexion, chaque sous-ensemble (51, 52) comprenant un moyen de pression (53) coopérant avec une paire de cannelures (4, 5) et un moyen de déplacement (56), ledit moyen de déplacement (56) mettant en rotation selon une direction transversale (AY1, AY2) ledit moyen de pression (53).

2. Banc d'essais selon la revendication 1,
**caractérisé en ce qu'**il comporte un moyen de lubrification (60) de ladite paire de cannelures (4, 5).

3. Banc d'essais selon l'une quelconque des revendications 1 à 2,
**caractérisé en ce que** ledit moyen de lubrification (60) comporte un tuyau d'acheminement (61) divergeant inséré dans ledit arbre d'entraînement (10), ledit arbre d'entraînement (10) comportant au moins un orifice radial (62) pour alimenter en lubrifiant ladite paire de cannelures (4, 5).

4. Banc d'essais selon la revendication 3,
**caractérisé en ce qu'**il comporte un couvercle (63) pour collecter ledit lubrifiant suite à la lubrification de ladite paire de cannelures (4, 5).

5. Banc d'essais selon l'une quelconque des revendications 1 à 4,
**caractérisé en ce que**, ladite première chaîne cinématique (20) comportant au moins une première partie (21) et une deuxième partie (22) qui est fixée à ladite première partie (21), la première partie (21) étant fixée audit arbre d'entraînement (10) et la deuxième partie (22) étant relié à l'arbre principal (6), ledit moyen de mise en couple (40) est muni d'un premier moyen de serrage (41) coopérant avec ladite première partie (21) et d'un deuxième moyen de serrage (42) coopérant avec ladite deuxième partie (22), ledit moyen de mise en couple (40) comprenant un moyen de réglage (43) du couple apte à requérir un déplacement angulaire relatif entre la première partie (21) et la deuxième partie (22).

6. Banc d'essais selon l'une quelconque des revendications 1 à 5,
**caractérisé en ce que** chaque chaîne cinématique (20, 30) comporte un moyen de désalignement (71, 72) axial et radial.

7. Banc d'essais selon la revendication 6,
**caractérisé en ce qu'**il comporte une roue phonique (73, 74) à une première extrémité (10') et une deuxième extrémité (10") de l'arbre d'entraînement (10).

8. Banc d'essais selon l'une quelconque des revendications 1 à 7,
**caractérisé en ce qu'**au moins une chaîne cinématique (20, 30) comporte un moyen (21) muni d'une raideur minimisée pour limiter l'impact de l'usure de chaque paire de cannelures (4, 5) sur ladite mise en couple.

9. Banc d'essais selon l'une quelconque des revendications 1 à 8,
**caractérisé en ce que** ledit moyen de pression (53) comprend un boîtier (54) mobile et un fourreau (55) amovible, ledit fourreau (55) amovible étant en contact avec l'arbre secondaire (7, 8) de la paire de cannelures (4, 5) associée.

10. Banc d'essais selon l'une quelconque des revendications 1 à 9,
**caractérisé en ce qu'**il comporte un moyen de blocage (80) longitudinal dudit arbre principal (6) pourvu d'au moins deux pions (81, 82) entre lesquels s'étend longitudinalement ledit arbre principal (6).

11. Banc d'essais selon l'une quelconque des revendications 1 à 10,
**caractérisé en ce que** ledit banc d'essais testant deux paires de cannelures (4, 5), une première paire (4) étant pourvue de premières cannelures (4') réparties sur une zone extrémale (6') d'un arbre principal (6) s'étendant longitudinalement et de deuxièmes cannelures (4") réparties sur un premier arbre secondaire (7) s'étendant longitudinalement, une deuxième paire (5) étant pourvue de premières cannelures (5') réparties sur une zone extrémale (6") de l'arbre principal (6) s'étendant longitudinalement et de deuxièmes cannelures (5") réparties sur un deuxième arbre secondaire (8) s'étendant longitudinalement, ledit arbre d'entraînement (10) étant solidaire en rotation des deux paires de cannelures (4, 5), ledit arbre d'entraînement (10) est relié à l'arbre principal (6) en étant mécaniquement relié au deuxième arbre secondaire (8) par la première chaîne cinématique (20) et au premier arbre secondaire (7) par une deuxième chaîne cinématique (30).

12. Banc d'essais selon la revendication 11,
**caractérisé en ce que** ledit moyen de mise en moment (50) comporte un moyen d'ajustement (57) requérant un déplacement angulaire relatif entre un premier sous-ensemble (51) coopérant avec la première paire de cannelures (4) et un deuxième sous-ensemble (52) coopérant avec la deuxième paire de cannelures (5).

13. Banc d'essais selon la revendication 12,
**caractérisé en ce que** ledit moyen de mise en moment (50) comporte un premier axe de liaison (59') solidaire en rotation d'un premier moyen de pression (53) du premier sous-ensemble (51) et un deuxième axe de liaison (59") solidaire en rotation d'un deuxième moyen de pression (53) du deuxième sous-ensemble (52), le premier axe de liaison (59') et le deuxième axe de liaison (59") présentant des dimensions distinctes.

14. Banc d'essais selon la revendication 12,
**caractérisé en ce que** ledit moyen d'ajustement (57) comporte un organe à longueur variable (57') lié à un organe élastique (58) ayant un piston (58") relié à un premier sous-ensemble (51) et un carter (58') lié à un deuxième sous-ensemble (52) , un moyen élastique (58"') étant disposé entre ledit piston (58") et ledit carter (58') et ledit organe à longueur variable (57') étant disposé entre ledit organe élastique (58) et ledit deuxième sous-ensemble (52).

15. Banc d'essais selon la revendication 11,
**caractérisé en ce qu'**il comporte :
- un arbre d'entraînement (10) dont une première extrémité (10') est attachée à un premier moyen de désalignement (71) de la première chaîne cinématique (20), ce premier moyen de désalignement (71) étant relié à une première partie (21) de la première chaîne cinématique (20) qui est fixée à une deuxième partie (22) de la première chaîne cinématique (20), ladite deuxième partie (22 étant solidaire du deuxième arbre secondaire (8),
- un moyen intermédiaire (31) en prise sur une deuxième extrémité (10") dudit arbre d'entraînement (10), ce moyen intermédiaire (31) étant relié à un deuxième moyen de désalignement (72) de la deuxième chaîne cinématique (30) qui est reliée au premier arbre secondaire (7),
- un moyen de mise en couple (40) desdites paire de cannelures pour décaler angulairement ladite première partie (21) par rapport à ladite deuxième partie (22),
- un moyen de mise en moment (50) muni d'un premier sous-ensemble (51) comprenant un premier moyen de pression (53) coopérant avec un moyen de déplacement (56) apte à mettre en rotation selon une direction transversale (AY1) le premier moyen de pression (53), ledit premier moyen de pression (53) exerçant une pression sur ledit premier arbre secondaire (7) variable en fonction de sa position angulaire par rapport à ladite direction transverse,
- un deuxième sous-ensemble (52) du moyen de mise en moment (50), ce deuxième sous-ensemble (52) comprenant un deuxième moyen de pression (53) coopérant avec ledit moyen de déplacement (56) apte à mettre en rotation selon une direction transversale (AY2) le deuxième moyen de pression (53), ledit deuxième moyen de pression (53) exerçant une pression sur ledit deuxième arbre secondaire (8) variable en fonction de sa position angulaire par rapport à ladite direction transversale (AY2),
- un moyen d'ajustement (57) du moyen de déplacement (56) pour requérir un déplacement angulaire relatif quantifiable entre le premier moyen de pression et le deuxième moyen de pression.

16. Procédé de test d'au moins une paire de cannelures (4, 5) à l'aide d'un banc d'essais (1) selon l'une quelconque des revendications 1 à 15,
**caractérisé en ce** que :
- on règle le couple de l'essai en manoeuvrant un moyen de mise en couple (40), puis on désolidarise ledit moyen de mise en couple (40) dudit banc d'essais (1),
- on règle le moment appliqué sur chaque paire de cannelures (4, 5) à l'aide d'un moyen de mise en moment (50), ledit moment étant modifiable au cours de l'essai,
- on mesure le déplacement relatif de deux organes tournants (10', 10") dudit banc d'essais (1), et on règle à nouveau ledit couple lorsque ledit déplacement relatif atteint un seuil prédéterminé.

17. Procédé selon la revendication 16,
**caractérisé en ce que**, ledit moyen de mise en moment (50) comportant deux sous-ensembles (51, 52) coopérant chacun avec une paire de cannelures (4, 5), chaque sous-ensemble (51, 52) étant muni d'un moyen de pression (53) solidaire d'un axe de liaison (59', 59") de mise en moment mis en rotation par un moyen de déplacement (56), on dispose une jauge de contrainte sur chaque axe de liaison (59', 59") de mise en moment, et on arrête le moteur du banc d'essais (1) lorsque lesdits jauges de contrainte transmettent des signaux différents.

## Patentansprüche

1. Testbank (1) zum Testen mindestens eines Paares von Rillen (4, 5) bestehend aus ersten Rillen (4', 5'), die auf einer Hauptwelle (6) verteilt angeordnet sind und die sich in Längsrichtung erstrecken, und zweiten Rillen (4", 5"), die auf einer ersten Nebenwelle (7) verteilt angeordnet sind und sich in Längsrichtung erstrecken, wobei die Hauptwelle (6) und die erste Nebenwelle (7) auf ein und derselben Drehachse (AX) angeordnet sind, und die Testbank einen Motor (2) aufweist, um jedes Rillenpaar (4, 5) zu drehen,
gekennzeichnet durch:
- eine Antriebswelle (10), die in Längsrichtung die Hauptwelle (6) von einem Ende zum anderen durchquert, wobei die Antriebswelle (10) drehfest mit jedem der Rillenpaare (4, 5) verbunden ist, wobei die Antriebswelle (10) mechanisch mit dem Motor (2) sowie mit der Hauptwelle (6) über einen ersten Antriebsstrang (20) und mit der ersten Nebenwelle (7) über einen zweiten Antriebsstrang (30) verbunden ist,
- ein Mittel (40) zum Verbinden des Paares von Rillen (4, 5),
- ein Mittel (50) zum Beaufschlagen mit einem Drehmoment, welches mit einer Untergruppe (51, 52) zum Beaufschlagen mit einem Drehmoment pro Paar von Rillen (4, 5) versehen ist, um das Paar von Rillen (4, 5) mit einem Biegemoment zu beaufschlagen, wobei jede Untergruppe (51, 52) ein Druckmittel (53) aufweist, welches mit einem Paar von Rillen (4, 5) zusammenwirkt, und ein Bewegungsmittel (56), wobei das Bewegungsmittel (56) das Druckmittel (53) entlang einer Querrichtung (AY1, AY2) dreht.

2. Testbank nach Anspruch 1,
gekennzeichnet durch ein Mittel (60) zum Schmieren des Paares von Rillen (4, 5).

3. Testbank nach einem der Ansprüche 1 bis 2,
**dadurch gekennzeichnet, dass** das Mittel (60) zum Schmieren eine divergierende Zuleitung (61) aufweist, die in die Antriebswelle (10) eingeführt ist, wobei die Antriebswelle (10) mindestens eine radiale Öffnung (62) aufweist, um das Paar von Rillen (4, 5) mit Schmiermittel zu speisen.

4. Testbank nach Anspruch 3,
gekennzeichnet durch eine Haube (63) zum Sammeln des Schmiermittels nach der Schmierung des Paars von Rillen (4, 5).

5. Testbank nach einem der Ansprüche 1 bis 4,
**dadurch gekennzeichnet, dass** der erste Antriebsstrang (20) mindestens einen ersten Teil (21) und einen zweiten Teil (22) aufweist, der an dem ersten Teil (21) befestigt ist, wobei der erste Teil (21) an der Antriebswelle (10) befestigt ist, und der zweite Teil (22) an der Hauptwelle (6) befestigt ist, wobei das Mittel (40) zum Verbinden mit einem ersten Klemmmittel (41) versehen ist, welches mit dem ersten Teil (21) zusammenwirkt, und mit einem zweiten Klemmmittel (42), welches mit dem zweiten Teil (22) zusammenwirkt, wobei das Mittel (40) zum Verbinden ein Einstellmitiel (43) der Verbindung aufweist, welches eine relative Winkelverschiebung zwischen dem ersten Teil (21) und dem zweiten Teil (22) anfordern kann.

6. Testbank nach einem der Ansprüche 1 bis 5,
**dadurch gekennzeichnet, dass** jeder Antriebsstrang (20, 30) ein Mittel (71, 72) zum axialen und radialen Versetzen aufweist.

7. Testbank nach Anspruch 6,
gekennzeichnet durch einen Tonfrequenzmotor (73, 74) an einem ersten Ende (10') und einem zweiten Ende (10") der Antriebswelle (10).

8. Testbank nach einem der Ansprüche 1 bis 7,
**dadurch gekennzeichnet, dass** mindestens ein Antriebsstrang (20, 30) ein Mittel (21) aufweist mit einer minimierten Steifigkeit, um die Auswirkung der Abnutzung jedes Paares von Rillen (4, 5) auf die Verbindung zu begrenzen.

9. Testbank nach einem der Ansprüche 1 bis 8,
**dadurch gekennzeichnet, dass** das Druckmittel (53) ein bewegliches Gehäuse (54) und eine abnehmbare Hülse (55) aufweist, wobei die abnehmbare Hülse (55) mit der Nebenwelle (7, 8) des Paares von zugehörigen Rillen (4, 5) steht.

10. Testbank nach einem der Ansprüche 1 bis 9,
gekennzeichnet durch ein Mittel (80) zum Blockieren der Hauptwelle (6) in Längsrichtung, welches mit mindestens zwei Stiften (81, 82) versehen ist, zwischen denen sich in Längsrichtung die Hauptwelle (6) erstreckt.

11. Testbank nach einem der Ansprüche 1 bis 10,
**dadurch gekennzeichnet, dass** die Testbank zwei Paare von Rillen (4, 5) testet, ein erstes Paar (4), welches mit ersten Rillen (4') versehen ist, die in einem Endbereich (6') einer Hauptwelle (6) verteilt angeordnet sind und sich in Längsrichtung erstrecken, und mit zweiten Rillen (4"), die auf einer ersten Nebenwelle (7) verteilt angeordnet sind und sich in Längsrichtung erstrecken, ein zweites Paar (5), welches mit ersten Rillen (5') versehen ist, die in einem Endbereich (6") der Hauptwelle (6) verteilt angeordnet sind und sich in Längsrichtung erstrecken, und mit zweiten Rillen (5"), die auf einer zweiten Nebenwelle (8) verteilt angeordnet sind und sich in Längsrichtung erstrecken, wobei die Antriebswelle (10) drehfest mit den beiden Paaren von Rillen (4, 5) verbunden ist, wobei die Antriebswelle (10) mit einer Hauptwelle (6) verbunden ist, indem sie über den ersten Antriebsstrang (20) mit der zweiten Nebenwelle (8) verbunden ist und mit der ersten Nebenwelle (7) über einen zweiten Antriebsstrang (30).

12. Testbank nach Anspruch 11,
dadurch gekennzeichet, dass das Mittel zum Beaufschlagen mit einem Drehmoment (50) ein Justiermittel (57) aufweist, das eine relative Winkelverschiebung zwischen einer ersten Untergruppe (51), die mit dem ersten Paar von Rillen (4) zusammenwirkt, und einer zweiten Untergruppe (52), die mit dem zweiten Paar von Rillen (5) zusammenwirkt, anfordert.

13. Testbank nach Anspruch 12,
**dadurch gekennzeichnet, dass** das Mittel (50) zum Beaufschlagen mit einem Drehmoment eine erste Verbindungsachse (59') aufweist, die drehfest mit einem ersten Druckmittel (53) der ersten Untergruppe (51) verbunden ist, und eine zweite Verbindungsachse (59"), die drehfest mit einem zweiten Druckmittel (53) der zweiten Untergruppe (52) verbunden ist, wobei die erste Verbindungsachse (59') und die zweite Verbindungsachse (59") unterschiedliche Abmessungen aufweisen.

14. Testbank nach Anspruch 12,
**dadurch gekennzeichnet, dass** das Justiermittel (57) ein Element mit variabler Länge (57') aufweist, das mit einem elastischen Element (58) verbunden ist, welches einen Kolben (58") aufweist, der mit einer ersten Untergruppe (51) und einem Gehäuse (58') verbunden ist, das mit einer zweiten Untergruppe (52) verbunden ist, wobei ein elastisches Mittel (58"') zwischen dem Kolben (58") und dem Gehäuse (58') angeordnet ist, und wobei das Element mit variabler Länge (57') zwischen dem elastischen Element (58) und der zweiten Untergruppe (52) angeordnet ist.

15. Testbank nach Anspruch 11,
gekennzeichnet durch
- eine Antriebswelle (10), bei der ein erstes Ende (10') mit einem ersten Mittel (71) zum Versetzen des ersten Antriebsstrangs (20) befestigt ist, wobei dieses erste Mittel (71) zum Versetzen mit einem ersten Teil (21) des ersten Antriebsstrangs (20) verbunden ist, der an einem zweiten Teil (22) des ersten Antriebsstrangs (20) befestigt ist, wobei der zweite Teil (22) mit der zweiten Nebenwelle (8) fest verbunden ist,
- ein Zwischenmittel (31), das direkt mit einem zweiten Ende (10") der Antriebswelle (10) angeordnet ist, wobei dieses Zwischenmittel (31) mit einem zweiten Mittel (72) zum Versetzen des zweiten Antriebsstrangs (30) verbunden ist, der mit der ersten Nebenwelle (7) verbunden ist,
- ein Mittel (40) zum Beaufschlagen der Paare von Rillen mit einem Drehmoment, um den ersten Teil (21) relativ zu dem zweiten Teil (22) winkelmäßig zu versetzen,
- ein Mittel (50) zum Beaufschlagen mit einem Drehmoment, welches mit einer ersten Untergruppe (51) versehen ist, die ein erstes Druckmittel (53) aufweist, das mit einem Bewegungsmittel (56) zusammenwirkt, das das erste Druckmittel (53) in eine Quer-Drehbewegung (AY1) versetzen kann, wobei das erste Druckmittel (53) einen in Abhängigkeit von seiner Winkelstellung relativ zu der Querrichtung variablen Druck auf die erste Nebenwelle (7) ausübt,
- eine zweite Untergruppe (52) des Mittels (50) zum Beaufschlagen mit einem Drehmoment, wobei diese zweite Untergruppe (52) ein zweites Druckmittel (53) aufweist, das mit dem Bewegungsmittel (56) zusammenwirkt, welches das zweite Druckmittel (53) in einer Querrichtung (AY2) drehen kann, wobei das zweite Druckmittel (53) einen in Abhängigkeit von seiner Winkelposition relativ zu der Querrichtung (AY2) variablen Druck auf die zweite Nebenwelle (8) ausübt,
- ein Justiermittel (57) des Bewegungsmittels (56), um eine quantifizierbare relative Winkelbewegung zwischen dem ersten Druckmittel und dem zweiten Druckmittel anzufordern.

16. Testverfahren für mindestens ein Paar von Rillen (4, 5) mit Hilfe einer Testbank (1) nach einem der Ansprüche 1 bis 15,
**dadurch gekennzeichnet, dass**:
- das Drehmoment des Tests eingestellt wird, indem ein Mittel (40) zur Beaufschlagung mit einem Drehmoment betätigt wird, und das Mittel (40) zur Beaufschlagung mit einem Drehmoment von der Testbank (1) gelöst wird,
- das auf jedes Paar von Rillen (4, 5) ausgeübte Drehmoment mit Hilfe eines Mittels (50) zur Beaufschlagung mit einem Biegemoment eingestellt wird, wobei das Biegemoment während des Tests veränderbar ist,
- die Relativbewegung zweier sich drehender Elemente (10', 10") der Testbank (1) gemessen wird, und erneut das Drehmoment eingestellt wird, wenn die Relativverschiebung einen vorbestimmten Schwellenwert erreicht.

17. Verfahren nach Anspruch 16,
**dadurch gekennzeichnet, dass** das Mittel (50) zur Beaufschlagung mit einem Drehmoment zwei Untergruppen (51, 52) aufweist, die jeweils mit einem Paar von Rillen (4, 5) zusammenwirken, wobei jede Untergruppe (51, 52) mit einem Druckmittel (53) versehen ist, das mit einer Verbindungsachse (59', 59") zum Anlegen eines Drehmoments fest verbunden ist, die von einem Bewegungsmittel (56) gedreht wird, wobei auf jeder Verbindungsachse (59', 59") zur Beaufschlagung mit einem Drehmoment ein Dehnungsmessstreifen angeordnet wird, und der Motor der Testbank (1) gestoppt wird, wenn die Dehnungsmessstreifen unterschiedliche Signale aussenden.

## Claims

1. A test bench (1) for testing at least one pair of splines (4, 5) which is provided with first splines (4', 5') which are distributed over a main shaft (6) extending longitudinally and with second splines (4", 5") which are distributed over a first secondary shaft (7) extending longitudinally, the main shaft (6) and the first secondary shaft (7) being arranged in one and the same axis of rotation (AX), said test bench comprising a motor (2) for causing each pair of splines (4, 5) to rotate,
**characterised in that** it comprises:
- a drive shaft (10) passing longitudinally straight through the main shaft (6), said drive shaft (10) being integral in rotation with each pair of splines (4, 5), said drive shaft (10) being mechanically connected to the motor (2) and to the main shaft (6) by a first kinematic chain (20) and to the first secondary shaft (7) by a second kinematic chain (30),
- a torque application means (40) for said pair of splines (4, 5),
- a moment application means (50) provided with one moment-application sub-assembly (51, 52) per pair of splines (4, 5) for submitting said pair of splines (4, 5) to a bending moment, each sub-assembly (51, 52) comprising a pressure means (53) which cooperates with a pair of splines (4, 5) and a displacement means (56), said displacement means (56) causing said pressure means (53) to rotate in a transverse direction (AY1, AY2).

2. A test bench according to Claim 1,
**characterised in that** it comprises a lubrication means (60) for said pair of splines (4, 5).

3. A test bench according to any one of Claims 1 to 2,
**characterised in that** said lubrication means (60) comprises a diverging delivery hose (61) inserted into said drive shaft (10), said drive shaft (10) comprising at least one radial orifice (62) for supplying said pair of splines (4, 5) with lubricant.

4. A test bench according to Claim 3,
**characterised in that** it comprises a cover (63) for collecting said lubricant once said pair of splines (4, 5) has been lubricated.

5. A test bench according to any one of Claims 1 to 4,
**characterised in that**, said first kinematic chain (20) comprising at least a first part (21) and a second part (22) which is fastened to said first part (21), the first part (21) being fastened to said drive shaft (10) and the second part (22) being connected to the main shaft (6), said torque application means (40) is provided with a first clamping means (41) which cooperates with said first part (21) and with a second clamping means (42) which cooperates with said second part (22), said torque application means (40) comprising a means for adjusting (43) the torque which is suitable for requiring a relative angular displacement between the first part (21) and the second part (22).

6. A test bench according to any one of Claims 1 to 5,
**characterised in that** each kinematic chain (20, 30) comprises an axial and radial misalignment means (71, 72).

7. A test bench according to Claim 6,
**characterised in that** it comprises a phonic wheel (73, 74) at a first end (10') and a second end (10") of the drive shaft (10).

8. A test bench according to any one of Claims 1 to 7,
**characterised in that** at least one kinematic chain (20, 30) comprises a means (21) provided with a minimised stiffness in order to limit the impact of the wear of each pair of splines (4, 5) on said torque application.

9. A test bench according to any one of Claims 1 to 8,
**characterised in that** said pressure means (53) comprises a mobile casing (54) and a removable sleeve (55), said removable sleeve (55) being in contact with the secondary shaft (7, 8) of the associated pair of splines (4, 5).

10. A test bench according to any one of Claims 1 to 9,
**characterised in that** it comprises a longitudinal blocking means (80) for said main shaft (6) which is provided with at least two pins (81, 82) between which said main shaft (6) extends longitudinally.

11. A test bench according to any one of Claims 1 to 10,
**characterised in that**, said test bench testing two pairs of splines (4, 5), a first pair (4) being provided with first splines (4') which are distributed over an end zone (6') of a main shaft (6) extending longitudinally and with second splines (4") which are distributed over a first secondary shaft (7) extending longitudinally, a second pair (5) being provided with first splines (5') which are distributed over an end zone (6") of the main shaft (6) extending longitudinally and with second splines (5") which are distributed over a second secondary shaft (8) extending longitudinally, said drive shaft (10) being integral in rotation with the two pairs of splines (4, 5), said drive shaft (10) is connected to the main shaft (6) by being mechanically connected to the second secondary shaft (8) by the first kinematic chain (20) and to the first secondary shaft (7) by a second kinematic chain (30).

12. A test bench according to Claim 11,
**characterised in that** said moment application means (50) comprises an adjustment means (57) requiring a relative angular displacement between a first sub-assembly (51) which cooperates with the first pair of splines (4) and a second sub-assembly (52) which cooperates with the second pair of splines (5).

13. A test bench according to Claim 12,
**characterised in that** said moment application means (50) comprises a first connecting spindle (59') which is integral in rotation with a first pressure means (53) of the first sub-assembly (51) and a second connecting spindle (59") which is integral in rotation with a second pressure means (53) of the second sub-assembly (52), the first connecting spindle (59') and the second connecting spindle (59") having different dimensions.

14. A test bench according to Claim 12,
**characterised in that** said adjustment means (57) comprises a member of variable length (57') linked to an elastic member (58) having a piston (58") connected to a first sub-assembly (51) and a housing (58') linked to a second sub-assembly (52), an elastic means (58"') being arranged between said piston (58") and said housing (58') and said member of variable length (57') being arranged between said elastic member (58) and said second sub-assembly (52).

15. A test bench according to Claim 11,
**characterised in that** it comprises:
- a drive shaft (10), a first end (10') of which is attached to a first misalignment means (71) of the first kinematic chain (20), this first misalignment means (71) being connected to a first part, (21) of the first kinematic chain (20) which is fastened to a second part (22) of the first kinematic chain (20), said second part (22) being integral with the second secondary shaft (8),
- an intermediate means (31) which is engaged on a second end (10") of said drive shaft (10), this intermediate means (31) being connected to a second misalignment means (72) of the second kinematic chain (30) which is connected to the first secondary shaft (7),
- a torque application means (40) for said pair of splines for angularly offsetting said first part (21) relative to said second part (22),
- a moment application means (50) provided with a first sub-assembly (51) comprising a first pressure means (53) which cooperates with a displacement means (56) suitable for causing the first pressure means (53) to rotate in a transverse direction (AY1), said first pressure means (53) exerting a pressure on said first secondary shaft (7) which is variable as a function of its angular position relative to said transverse direction,
- a second sub-assembly (52) of the moment application means (50), this second sub-assembly (52) comprising a second pressure means (53) which cooperates with said displacement means (56) suitable for causing the second pressure means (53) to rotate in a transverse direction (AY2), said second pressure means (53) exerting a pressure on said second secondary shaft (8) which is variable as a function of its angular position relative to said transverse direction (AY2),
- an adjustment means (57) of the displacement means (56) for requiring a quantifiable relative angular displacement between the first pressure means and the second pressure means.

16. A method for testing at least one pair of splines (4, 5) using a test bench (1) according to any one of Claims 1 to 15,
**characterised in that**:
- the torque of the test is adjusted by manoeuvring a torque application means (40), then said torque application means (40) is disconnected from said test bench (1),
- the moment applied to each pair of splines (4, 5) is adjusted by means of a moment application means (50), said moment being able to be modified during the test,
- the relative displacement of two rotary elements (10', 10") of said test bench (1) is measured, and said torque is readjusted when said relative displacement reaches a predetermined threshold.

17. A method according to Claim 16, **characterised in that**, said moment application means (50) comprising two sub-assemblies (51, 52) which each cooperate with one pair of splines (4, 5), each sub-assembly (51, 52) being provided with a pressure means (53) which is integral with a moment-application connecting spindle (59', 59") which is caused to rotate by a displacement means (56), a strain gauge is arranged on each moment-application connecting spindle (59', 59"), and the motor of the test bench (1) is stopped when said strain gauges transmit different signals.
